(19) Europäisches Patentamt
European Patent Office
Office européen des brevets

(11) **EP 3 443 297 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(21) Anmeldenummer: **17722660.2**

(22) Anmeldetag: **06.04.2017**

(51) Int Cl.:
**G01B 11/24** (2006.01) **G01N 21/3581** (2014.01)

(86) Internationale Anmeldenummer:
**PCT/DE2017/100271**

(87) Internationale Veröffentlichungsnummer:
**WO 2017/178009 (19.10.2017 Gazette 2017/42)**

(54) **TERAHERTZ-MESSVORRICHTUNG ZUR VERMESSUNG VON PRÜFOBJEKTEN SOWIE EIN TERAHERTZ-MESSVERFAHREN**

TERAHERTZ MEASURING APPARATUS FOR MEASURING TEST OBJECT AND A TERAHERTZ MEASUREMENT METHOD

DISPOSITIF DE MESURE TÉRAHERTZ POUR LA MESURE D'OBJETS À CONTRÔLER ET PROCÉDÉ DE MESURE TÉRAHERTZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2016 DE 102016105599**

(43) Veröffentlichungstag der Anmeldung:
**20.02.2019 Patentblatt 2019/08**

(73) Patentinhaber: **iNOEX GmbH Innovationen und Ausrüstungen für die Extrusionstechnik 49324 Melle (DE)**

(72) Erfinder: **THIEL, Marius 49090 Osnabrück (DE)**

(74) Vertreter: **Bremer, Ulrich Advopat Patent- und Rechtsanwälte Theaterstraße 6 30159 Hannover (DE)**

(56) Entgegenhaltungen:
**DE-A1-102010 010 285     US-A1- 2005 098 728**
**US-A1- 2015 211 934**

**Beschreibung**

Die Erfindung betrifft eine Terahertz-Messvorrichtung zur Vermessung von Prüfobjekten sowie ein Terahertz-Messverfahren.

Terahertz-Messverfahren ermöglichen die Durchsuchung von Prüfobjekten aus z. B. Kunststoff, Papier, Steingut wie Porzellan usw. ohne direkten Kontakt mit dem Prüfobjekt. Bei Laufzeitmessungen wird Terahertz-Strahlung auf ein Prüfobjekt eingestrahlt und die an Grenzflächen zwischen Schichten mit unterschiedlichem Brechungsindex jeweils teilreflektierte Strahlung gemessen, so dass Laufzeitunterschiede der reflektierten Strahlungen zur Ermittlung von Schichtdicken herangezogen werden können.

Hierzu wird die Terahertz-Strahlung im Allgemeinen von einer Sende- und Empfangseinheit in einem Abstrahl-Kegel (Abstrahl-Raumwinkel) entlang einer optischen Achse auf das Prüfobjekt gerichtet, wobei die optische Achse senkrecht zu den Grenzflächen ausgerichtet ist, so dass die reflektierte Terahertz-Strahlung entlang der optischen Achse zurück zu der Terahertz-Sende- und Empfangseinheit gestrahlt wird.

Um Prüfobjekte vollständig zu erfassen, können mehrere Terahertz-Sende- und Empfangseinheiten um das Prüfobjekt herum positioniert werden oder die Terahertz-Sende- und Empfangseinheiten relativ zum Prüfobjekt verfahren werden.

Es zeigt sich jedoch, dass neben den ordnungsgemäßen Messpeaks der Grenzflächen, die zur Ermittlung der Schichtdicken herangezogen werden, weiterhin Störungen detektiert werden, die das Messergebnis der Schichtdickenmessung beeinträchtigen können.

Weiterhin sind z. B. Ultraschallmessungen zum Detektieren von Lunkern bzw. Lufteinschlüssen in Prüfobjekten bekannt, wodurch fehlerhafte Prüfobjekte erkannt werden können.

Die DE 10 2010 010 285 A1 beschreibt ein Verfahren zur Materialuntersuchung einer Probe mittels Terahertz-Spektroskopie zur Identifikation von Materialunregelmäßigkeiten der Probe, wobei Terahertz-Wellen auf die zu untersuchende Probe gesendet und Wellen aufgenommen und mittels einer Empfangseinrichtung als Zeitbereichssignal oder Frequenzbereichssignal ermittelt werden, wobei eine Auswerteeinrichtung eine Ausgabefunktion als Anomaliewerte darstellt und hieraus Materialunregelmäßigkeiten bestimmt werden.

In US 2005/098728 A1 wird ein System und Verfahren zur nicht-destruktiven Untersuchung von Abnormalitäten eines Materials unter einer beschichteten Oberfläche beschrieben. Hierbei wird von einer Terahertz- Beleuchtungseinheit Licht auf einen Bereich gestrahlt und reflektiertes Licht detektiert. Als Abnormalitäten können insbesondere Verschlechterungen, Korrosion und Brüche oder Sprünge ermittelt werden.

Die US 2015/211934 A1 beschreibt ein Verfahren zum Ermitteln von Parametern einer Beschichtung eines Körpers. Hierbei wird THz-Strahlung kontaktlos ausgesandt und reflektierte Strahlung detektiert. Die Beschichtung kann z.B. eine Polymer- Beschichtung sein, z.B. eine Farbe oder ein Lack eines Fahrzeugs.

Der Erfindung liegt die Aufgabe zugrunde, eine Terahertz- Messvorrichtung und ein Terahertz-Messverfahren zum Vermessen eines Prüfobjektes zu schaffen, die mit relativ geringem Aufwand gute Vermessungen ermöglichen.

Diese Aufgabe wird durch eine Terahertz-Messvorrichtung und ein Terahertz-Messverfahren nach den unabhängigen Ansprüchen gelöst. Die Unteransprüche beschreiben bevorzugte Weiterbildungen.

Erfindungsgemäß wird somit erkannt, dass durch die Terahertz- Strahlung auch gezielt Fehlstellen des Prüfobjektes detektiert werden können. Hierzu werden vorzugsweise Reflexionen der Terahertz-Strahlung detektiert, die nicht durch Reflektion der ausgesandten Terahertz-Strahlung an den ordnungsgemäßen Grenzflächen bzw. Schichtgrenzen erzeugt wird.

Erfindungsgemäß wird hierbei erkannt, dass Fehlstellen, z. B. Lunker bzw. Luft- oder Gaseinschlüsse im Material des Prüfobjektes, Materialanhäufungen oder auch Blasen auf den Unter- und Oberseiten des Prüfobjektes, zu lokalen Grenzflächen führen, insbesondere auch zu gekrümmten bzw. geschlossenen Flächen, die jeweils Bereiche aufweisen, die zu der einfallenden Terahertz-Strahlung senkrecht stehen, so dass eine Detektion durch Messung der reflektierten Terahertz-Strahlung unter unterschiedlichen Einfallswinkeln möglich ist. So bilden z. B. Lunker im Allgemeinen sphärisch geschlossene Flächen wie z. B. Kugeln, rotationsellipsoide oder linsenförmige Bereiche aus, an denen Messungen durch Reflexion möglich sind, oftmals sogar an einer Vorderseite und einer Rückseite des Lunkers.

Hierzu wird ein Kernbereich der ausgesandten Terahertz-Strahlung um die optische Achse herum durch eine Blende ausgeblendet, so dass lediglich in einem Abstrahl-Kegelmantel um die Blende herum Terahertz-Strahlung auf das Prüfobjekt gestrahlt wird. Somit wird die Terahertz-Strahlung auf die Grenzflächen unter einem nicht-senkrechten Winkel eingestrahlt, so dass von Prüfobjekt ausgehende und zu der Sende- und Empfangseinheit gerichtete Reflexionen lediglich an Fehlstellen bzw. Fehlern im Prüfobjekt auftreten können.

Eine derartige Ausbildung ermöglicht somit den Vorteil einer einfachen Ausbildbarkeit mit geringem zusätzlichen Aufwand, z. B. durch eine zusätzliche Blende, wodurch der hohe Messpeak der Reflexionen an den Grenzflächen, die für Schichtdickenmessungen herangezogen werden, nicht auftritt und somit eine Detektion schwächerer Messpeaks ermöglicht wird.

Die Vermessung auf Fehlstellen kann auch mit einer Vermessung von Schichtdicken des Prüfobjektes kombiniert werden, indem z. B. die Blende verstellbar ist zwischen einer aktiven Blenden-Stellung zum Ausblenden des Kernbereichs, und einer passiven, eingefahrenen Stellung, bei der die Blende entweder ganz aus dem Abstrahlkegel der Terahertz-Strahlung entfernt, oder z.

B. in eine flache Position eingeklappt ist. Somit können bereits sowohl Schichtdicken als auch Fehlstellen detektiert werden.

Gemäß einer weiteren Ausbildung wird die Terahertz-Strahlung auf die Grenzflächen unter einem nicht-senkrechten Einfallswinkel eingestrahlt, so dass die Haupt-Reflexionen nicht entlang der optischen Achse zurück reflektiert werden, sondern von der Terahertz-Sende- und Empfangseinheit weg reflektiert werden. Auch in diesem Fall kann somit detektierte reflektierte Terahertz-Strahlung Fehlstellen im Prüfobjekt zugeordnet werden. Auch hier ist der apparative Aufwand gering, da nur eine Verstellung der optischen Achse erforderlich ist.

Anstelle einer Verstellung der gesamten Terahertz-Sende- und Empfangseinheit ist hierbei auch die Verstellung einer nachgeschalteten Optik möglich, z. B. eines schwenkbaren Spiegels. Somit kann der Spiegel z. B. zwischen einer Messposition zur Vermessung einer Schichtdicke und einer Messposition zur Messung von Fehlstellen verstellt werden, so dass auch hier eine Kombination beider Messungen möglich ist.

Indem die Hauptreflexions-Strahlung des Prüfobjektes somit durch eine Blende ausgeblendet wird, kann die empfangene Signalamplitude nachfolgend gezielt auf kleinere Messpeaks untersucht werden, die somit eindeutig Fehlstellen zugeordnet werden können.

Vorteilhafterweise erfolgt die Vermessung unter mehreren Winkeln oder Positionen um das Prüfobjekt herum, so dass unterschiedlich ausgerichtete Fehlstellen oder Lunker detektiert werden können.

Gemäß einer weiteren Ausbildung kann jeweils eine erfindungsgemäße Terahertz-Sende- und Empfangseinheit gegenüberliegend zu einer Standard-Terahertz-Sende- und Empfangseinheit zur Vermessung der Schichtdicke des Prüfobjektes positioniert werden. Hierbei kann die Blende in der optischen Achse der erfindungsgemäßen Terahertz-Sende- und Empfangseinheit, die einen Kernbereich der Terahertz-Strahlung um die optische Achse herum ausblendet, sicherstellen, dass bei der gegenüberliegenden Standard-Terahertz-Sende- und Empfangseinheit keine direkte Bestrahlung erfolgt; die Standard-Terahertz-Sende- und Empfangseinheit kann somit innerhalb ihres Kernbereichs um die optische Achse herum die Schichtdicke des Prüfobjektes durch eine Laufzeitmessung untersuchen. Vorteilhafterweise strahlt und detektiert die Standard-Terahertz-Sende- und Empfangseinheit lediglich in dem durch die Blende abgeschatteten Bereich, so dass sie auch keine Streustrahlung der Terahertz-Sende- und Empfangseinheit als Signal detektiert.

Bei dieser Ausführungsform kann weiterhin auch in dem Kernbereich der Blende, insbesondere an der Rückseite der Blende, ein Spiegel vorgesehen werden, der somit die (zweite) optische Achse der Standard-Terahertz-Sende- und Empfangseinheit zurück wirft. Somit kann die von der Standard-Terahertz-Sende- und Empfangseinheit ausgesandte Strahlung zunächst das Prüfobjekt vollständig durchlaufen, und nachfolgend von dem Spiegel total reflektiert werden, so dass diese total reflektierte Terahertz-Strahlung nachfolgend wieder an den Grenzflächen reflektiert werden kann und nach erneuter Totalreflexion an dem Spiegel wieder zu der Standard-Terahertz-Sende- und Empfangseinheit reflektiert wird. Somit sind Umkehr-Abtastungen des Prüfobjektes möglich, bei denen die Grenzflächen von beiden Seiten her bestrahlt werden und die Messpeaks um den Totalreflexions-Peaks um dem Spiegel herum miteinander verglichen werden, um z. B. feinere Schichtdicken bzw. dünnere Schichten vermessen zu können.

Somit sind synergistische Kombinationen der Blende mit Spiegeln möglich, so dass sich die gegenüberliegenden Sende- und Empfangseinheiten nicht nur nicht stören, sondern der apparative Aufwand doppelt genutzt werden kann.

Weiterhin kann vorteilhafterweise eine genaue Ermittlung der Position von Fehlstellen, und somit auch der Größe oder Form von Fehlstellen erfolgen, indem von mehreren Terahertz -Sende- und Empfangseinheiten bzw. aus unterschiedlichen Winkeln Terahertz-Strahlung auf das Prüfobjekt gestrahlt und empfangen wird und die so ermittelten Positions- Punktemengen geschnitten werden. Somit kann eine vollumfängliche und vollständige Vermessung des Prüfobjektes durch Bestrahlung von mehreren Seiten oder Winkeln mit der genauen Positionsbestimmung kombiniert werden.

Eine weitere Ausführungsform ermöglicht eine Kombination von Schichtdickenmessungen mit der Ermittlung von Fehlstellen, indem in den Signaldiagrammen die Messpeaks der Fehlstellen zusätzlich zu den ordnungsgemäßen Messpeaks der Grenzflächen auftreten. Hierbei können die ordnungsgemäßen Messpeaks aus einem Vergleich mit vorherigen und nachfolgenden Messungen oder aus einem Vergleich mit der ordnungsgemäßen Schichtdicke erkannt werden, bzw. es kann ein Auftreten zusätzlicher Messpeaks bereits zu einer Fehlermeldung führen. Diese Ausführungsform kann somit insbesondere auch mit den weiteren Ausführungsformen kombiniert werden. Bei einer derartigen Ausführungsform können die ordnungsgemäßen Messpeaks in der Signalamplitude durch geeignete Ausblendbereiche ausgeblendet werden, um eine sichere und einfache Auswertung auf Fehlstellen zu ermöglichen, ohne den THz-Strahl in der Messvorrichtung physikalisch auszublenden.

Die erfindungsgemäße Messvorrichtung kann insbesondere zur Durchführung des erfindungsgemäßen Messverfahrens eingesetzt werden; das erfindungsgemäße Messverfahren kann insbesondere unter Verwendung oder Einsatz der erfindungsgemäßen Messvorrichtung ausgeführt werden.

Erfindungsgemäß sind daher mit geringem apparativen Aufwand vollständige Vermessungen von Prüfobjekten, sowohl auf Schichtdicken bzw. ordnungsgemäße Ausbildungen, als auch zusätzlich auf Fehlstellen, insbesondere auch der Position und/oder Größe und/oder Formgebung, möglich.

Die Erfindung wird im Folgenden anhand der beiliegenden Zeichnungen an einigen Ausführungsformen näher erläutert. Es zeigen:

Fig. 1        eine Terahertz-Messvorrichtung gemäß einer Ausführungsform bei Vermessung eines Rohres mit Fehlstellen;

Fig. 2        das Messdiagramm der Messvorrichtung aus Fig. 1;

Fig. 3        ein Aufbau einer Terahertz-Messvorrichtung mit nicht-senkrechtem Einfalls-Winkel, bei Vermessung einer Flachprobe mit Fehlstellen;

Fig. 4        eine Terahertz-Messvorrichtung gemäß einer weiteren Ausführungsform mit zwei gegenüberliegenden Sende- und Empfangseinheiten;

Fig. 5        eine weitere Terahertz-Messvorrichtung entsprechend Fig. 4 mit mehreren Sende- und Empfangseinheiten;

Fig. 6        eine Darstellung der Strahlenverläufe beim Messprinzip der Umkehrabtastung;

Fig. 7        Signaldiagramme der Umkehrabtastung: a) idealisierte Teilpeaks und b) Messpeaks; und

Fig. 8        eine Terahertz-Messvorrichtung zur vollumfänglichen Vermessung und Positionsbestimmung von Fehlstellen;

Fig. 9 bis 11   eine Terahertz-Messvorrichtung gemäß einer Ausführungsform zur Vermessung einer Probe mit Fehlstellen;

Fig. 12 bis 14   eine messtechnische Auswertung von Signalamplituden.

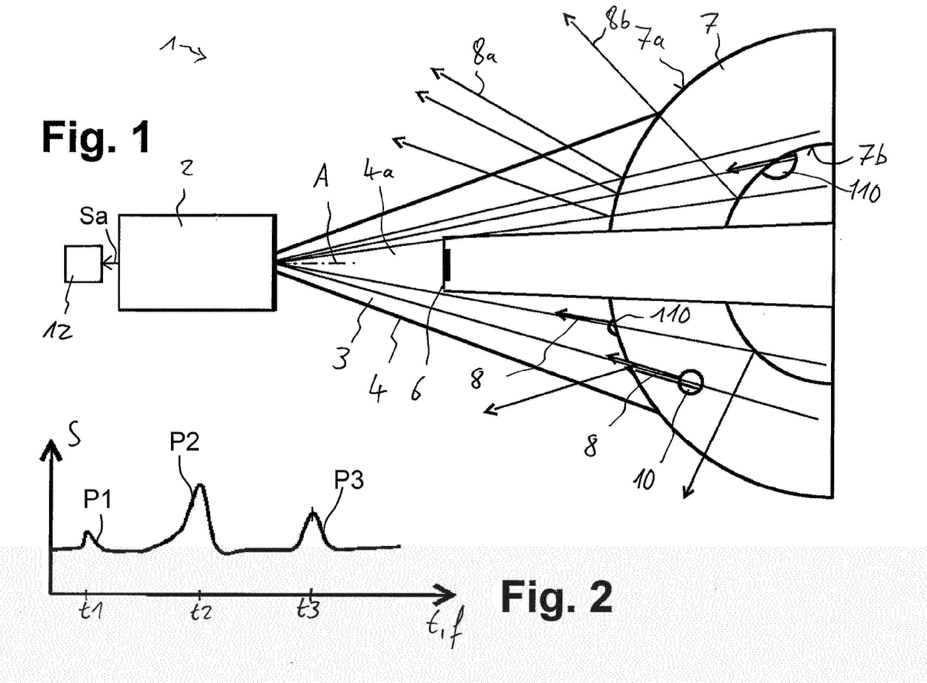

Eine Terahertz-Messvorrichtung 1 weist gemäß Fig. 1 eine Sende- und Empfangseinheit 2 zum Aussenden von Terahertz-Strahlung 3 innerhalb eines Öffnungskegels oder Abstrahl-Raumwinkels 4 entlang einer optischen Achse A auf. Die Terahertz-Messvorrichtung 1 sendet hierbei die Terahertz-Strahlung 3 vorzugsweise in einem Frequenzbereich von 10 GHz bis 10 THz, insbesondere von 100 GHz bis 3 THz, aus. Hierbei kann die Terahertz-Sende- und Empfangseinheit 2 insbesondere vollelektronisch, d. h. mit Sendedipol und Empfangsdipol, ausgebildet sein; es sind jedoch auch optische bzw. elektronisch-optische Sende- und Empfangseinheiten 2 möglich.

In der optischen Achse A ist eine Blende 6 vorgesehen, die die einfallende Terahertz-Strahlung 3 z. B. absorbiert, oder auch - in nicht gezeigter Weise - nicht-senkrecht bzw. nicht zurück zu der Sende- und Empfangseinheit 2 reflektiert.

Die aus der Terahertz-Sende- und Empfangseinheit 2 und der Blende 6 gebildete Terahertz-Messvorrichtung 1 dient zur Vermessung eines Prüfobjektes 7, hier eines Rohres mit einer zylindrischen - d. h. in der Schnittebene runden - Außenseite 7a und entsprechend einer hierzu konzentrischen Innenseite 7b. Hierbei können Prüfobjekte 7 aus einem für die Terahertz-Strahlung 3 durchlässigen Material wie Kunststoff, faserverstärkter Kunststoff (GFK, CFK), Keramik, Papier, Glas, Gummi und auch Kombinationen aus diesen Materialien vermessen werden, wobei die Materialien jeweils einen Brechungsindex n7 aufweisen, der von dem Brechungsindex n0 der Umgebung (Luft) mit n0 = 1 verschieden ist. Kunststoffmaterialien weisen üblicherweise einen Brechungsindex von etwa n7 = 1,5 auf. Somit tritt die einfallende Terahertz-Strahlung 3 im Wesentlichen durch die Außenseite 7a (Vorderseite) und die Innenseite (Rückseite) 7b des Prüfobjektes 7, wobei ein kleiner Anteil der Intensität von z. B. etwa 4 % an der Grenzfläche zwischen den Medien mit unterschiedlichen Brechungsindices reflektiert wird, so dass THz-Strahlung 8 reflektiert wird. An der Außenseite 7a wird somit erste reflektierte Strahlung 8a reflektiert, an der Innenseite 7b zweite reflektierte THz-Strahlung 8b. Mehrfach-Reflexionen werden hier nicht beachtet, da ihre Intensität sehr klein ist.

Da die Blende 6 einen Kern-Bereich 4a des Abstrahl-Raumwinkels 4 abschattet, wird bei einem derartigen konvex gewölbten Prüfobjekt 7 oder auch einem planen Prüfobjekt an den ordnungsgemäßen Grenzflächen, d. h. einer ordnungsgemäßen, zylindrischen Außenseite 7a und ordnungsgemäßen zylindrischen Innenseite 7b die erste reflektierte Strahlung 8a und zweite reflektierte Strahlung 8b nicht zu der Sende- und Empfangseinheit 2 zurück reflektiert.

In dem Prüfobjekt 7 sind an den Flächen 7a, 7b und/oder in dem Material ggf. Fehlstellen 10, 110 vorhanden, die insbesondere Lunker 10, d. h. Lufteinschlüsse, oder Blasen 110 sein können. Derartige Fehlstellen 10 können insbesondere bei einem Extrusionsprozess auftreten und die Qualität des Prüfobjektes 7 entscheidend beeinflussen. In Fig. 1 sind beispielhaft zwei auf den Flächen, d. h. auf der Vorderseite 7a und auf der Rückseite 7b ausgebildete, vortretende Blasen 110, sowie ein in dem Material ausgebildeter Lunker (Lufteinschluss, Luftblase) 10 eingezeichnet.

Wie aus Fig. 1 ersichtlich, treten an den Grenzflächen 10a, 110a der Fehlstellen 10, 110 Reflexionen der eingestrahlten THz-Strahlung 3 auf. Es zeigt sich insbesondere auch, dass derartige Blasen 110 oder Lunker 10 ganz oder teilweise geschlossen gekrümmt ausgebildet sind, so dass meist Bereiche auf ihrer Grenzflächen 10a, 110a auftreten, deren Normale im Wesentlichen parallel zu der einfallenden THz-Strahlung 3 liegt, so dass eine Reflexion zurück zu der THz-Sende- und Empfangseinrichtung 2 erfolgt.

Fig. 2 zeigt ein Signaldiagramm, d. h. die Signalamplitude S(t) der aufgenommenen THz-Strahlung 8 als Funktion der Zeit t, oder bei z. B. einem vollelektronischen System mit einer FM-Modulation (Frequenzmodulation) als Funktion der Frequenz f oder Zeit t. Gemäß Fig. 2 wird von einer Steuer- und Auswerteeinheit 12 erkannt, dass bei den Zeitpunkten t1, t2, t3, oder entsprechenden Frequenzwerten, nicht zulässige Messpeaks P1, P2, P3, d.h. Reflexionen an Fehlstellen 10, 110 vorliegen, und somit das Prüfobjekt 7 nicht ordnungsgemäß ist. Somit kann die Steuer- und Auswerteeinheit 12 ein Fehlersignal ausgeben.

Auch können die Abstände d10, d110 der Fehlstellen 10, 110 durch eine Laufzeit- Berechnung zumindest grob klassifiziert werden. Eine genaue Lokalisierung einer Fehlstelle 10, 110 ist mit der Anordnung nach Fig. 1 mit einer einzigen THz-Sende- und Empfangseinrichtung 2 zunächst noch nicht möglich. Es ist jedoch bereits die qualitative Feststellung eines Fehlers möglich. Auch kann mit der Laufzeit eine Plausibilisierung durchgeführt werden, indem ermittelt wird, dass der Abstand innerhalb der Erstreckung des Prüfobjektes 7 liegt, d.h. nicht durch eine Reflexion hinter dem Prüfobjekt 7.

Weiterhin kann auch die Breite der Messpeaks P1, P2, P3 ausgewertet werden, um ggf. Aussagen zu erhalten, mit denen die Fehlstellen 10, 110 unterschieden werden können. So erzeugt ein geschlossener Lunker 10 Reflexionen an seiner Vorderseite und Rückseite und somit einen breiten Messpeak P2, wohingegen die Blasen 110 lediglich mit ihrer dünnen Schicht, d.h. nahe aneinander liegender Vorderseite und Rückseite Reflexionen erzeugen, so dass geringere Peakbreiten gemessen werden, z.B. als Halbwertsbreiten.

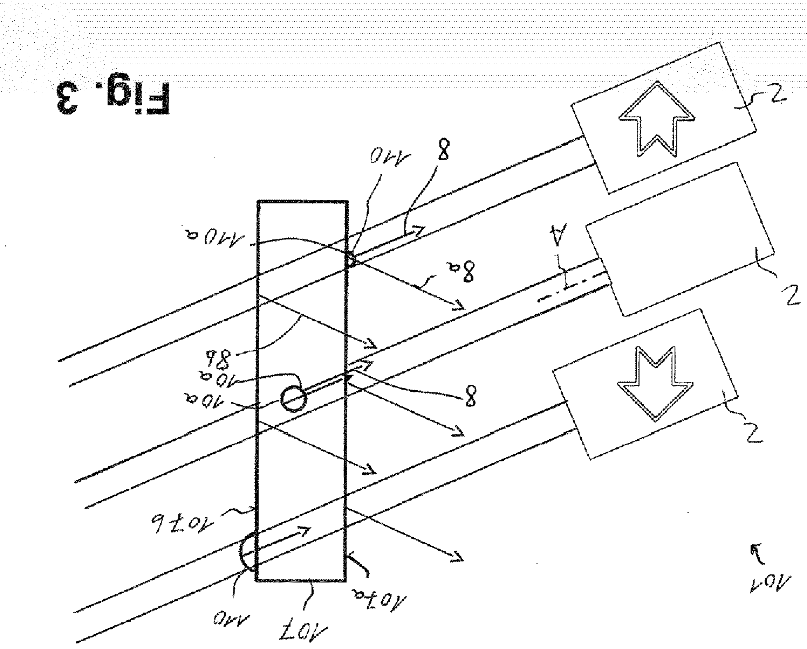

Fig. 3 zeigt einen Aufbau einer Messvorrichtung 101, bei der die optische Achse A der Sende- und Empfangseinrichtung 2 nicht-senkrecht zu den Grenzflächen 107a, 107b eines Prüfobjektes 107, hier z. B. einer Flachprobe 107, z. B. einer Folie, mit planparalleler Vorderseite 107a und Rückseite 107b, ausgerichtet ist. Hierzu kann die gesamte Sende- und Empfangseinrichtung 2, ihr Messkopf oder eine geeignete vorgeschaltete Optik, z. B. ein schwenkbarer Spiegel, verstellt werden. Vorteilhafterweise ist der Abstrahlkegel relativ klein bzw. schmal, um einen senkrechten Einfall auf die ordnungsgemäßen Grenzflächen 107a, 107b zu vermeiden.

Die Vermessung nach Fig. 3 kann z. B. nach der Herstellung beim Transport des Prüfobjektes 107 in Förderrichtung und Fördergeschwindigkeit v erfolgen, indem die optische Achse A schräg bzw. nicht-senkrecht zur Förderrichtung gestellt wird. Somit ist keine Blende erforderlich, um einen direkten Reflexionspeak der an der Vorderseite 107a reflektierten ersten THz-Strahlung und an der Rückseite 107b reflektierter zweiten THz-Strahlung 8b zu vermeiden (ein Aufbau ohne Blende fällt dabei nicht unter die Ansprüche).

Somit werden die Sende- und Empfangseinheit 2 und das Prüfobjekt 107 relativ zueinander in einer Richtung nicht-parallel zur optischen Achse A verstellt, insbesondere parallel zu den Flächen 107a, 107b. Bei der Vermessung eines Prüfobjektes 107 nach seiner Herstellung kann somit insbesondere das Prüfobjekt 107 in seiner Förderrichtung v gefördert werden, und bei stationärer Sende- und Empfangseinrichtung vermessen werden. Gemäß den drei eingezeichneten Positionen wird somit eine obere Blase 110 an einer oberen Position der Sende- und Empfangseinrichtung relativ zu der mittleren Position, und eine untere Blase 110 auf der Vorderseite 7a an einer unteren Position im Mittelpunkt. Es ergibt sich wiederum somit ein Signaldiagramm entsprechend Fig. 2, wo an unterschiedlichen Zeitpunkten t1, t2 und t3 die drei Fehlstellen 10, 110 detektiert werden können. Hierbei ist der zeitliche Abstand zwischen den Stellen t1, t2 und t3 insbesondere von dem Fördervorgang bzw. der Verstellgeschwindigkeit des Prüfobjektes 107 und/oder der Verstellgeschwindigkeit der Sende- und Empfangseinrichtung 2 abhängig.

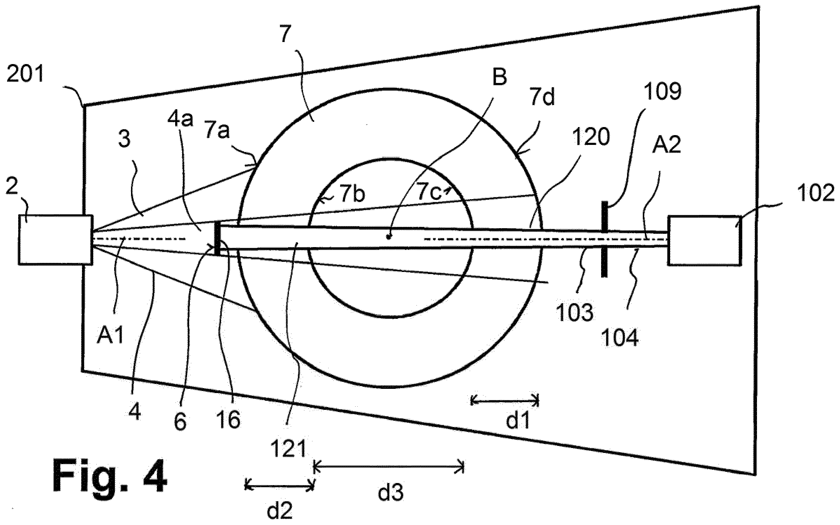

Fig. 4 zeigt eine Ausführungsform einer Messvorrichtung 201, bei der eine Sende- und Empfangseinrichtung 2 gemäß Fig. 1, 2 und eine Standard-THz-Sende- und Empfangseinrichtung 102 an gegenüberliegenden Seiten bezüglich des Prüfobjektes 7 oder einer Prüfobjekt-Position 1007 vorgesehen sind. Insbesondere können ihre beiden optischen Achsen A1, A2 ineinander fallen und somit eine gemeinsame optische Achse A bilden, die vorteilhafterweise eine Rohrachse B des Prüfobjektes 7 schneidet.

Die Blende 6 der links gezeigten THz-Sende- und Empfangseinrichtung 2 bildet von ihrer Rückseite, d. h. der zu der Standard- THz-Sende- und Empfangseinrichtung 102 weisenden Seite, einen Spiegel 16 dar, der senkrecht zur optischen Achse A steht und diese somit zurückspiegelt.

Somit wird hier eine Terahertz-Messvorrichtung 201 geschaffen, bei der zusätzlich zur Vermessung von Fehlstellen 10, 110 eine direkte Vermessung des Prüfobjektes 7 in einem zweiten Abstrahl-Kegel 104 um die optische Achse A2 herum vorgesehen ist, um z. B. Schichtdicken des Prüfobjektes 7 zu ermitteln. Gemäß der gezeigten Ausführungsform durchleuchtet die von der Standard-THz-Sende- und Empfangseinrichtung 102 ausgesandte zweite THz-Strahlung 103 einen rechten Wandbereich 120 mit den Grenzflächen 7d und 7c, und nachfolgend nach Transmission durch den Wandbereich 120 den linken Wandbereich 121, der durch die Grenzflächen 7a und 7b, d. h. die Vorderseite 7a und Rückseite 7b gebildet ist. Die von der Standard-THz-Sende- und Empfangseinrichtung 2 ausgesandte Strahlung 103 wird nachfolgend an dem Spiegel 16 reflektiert und durchläuft somit erneut das Prüfobjekt 7 durch die Grenzflächen 7a, 7b, 7c und 7d und kann nachfolgend von der Standard-THz-Sende- und Empfangseinrichtung 102 detektiert werden kann. Hierbei ist eine Blende 109 vorgesehen, die den Abstrahl-Kegel bzw. Abstrahl-Raumwinkel 104 der Standard-THz-Sende- und Empfangseinrichtung 2 auf den Spiegel 16 begrenzt.

Da weiterhin die erste Blende 6 der zur Detektion von Fehlstellen dienenden - in Fig. 4 linken - THz-Sende- und Empfangseinrichtung 2 den Abstrahl-Raumwinkel 4 der THz-Sende- und Empfangseinrichtung 2 auf den äußeren Bereich begrenzt und den Kernbereich 4a abschattet, stören sich die beiden THz-Sende- und Empfangseinrichtungen 2, 102 in ihrer Detektion nicht. Somit können gleichzeitig durch die THz-Sende- und Empfangseinheit 2 in oben beschriebener Weise Fehlstellen 10, 110 im Prüfobjekt 7 detektiert werden, und in der gleichen optischen Achse A (A1 = A2) durch die Standard-THz-Sende- und Empfangseinrichtung 102 direkte Laufzeitmessungen am Prüfobjekt 7 durchgeführt werden, d. h. insbesondere Wanddicken vermessen werden, hier gemäß Fig. 4 eine erste Schichtdicke oder Wanddicke d1 im rechten Wandbereich 120, eine zweite Wanddicke d2 in dem linken Wandbereich 121, sowie auch des Innendurchmessers d3 als Luftschicht zwischen den Wandbereichen.

Durch die zweite Blende 109 wird auch vermieden, dass an Fehlstellen 10, 110 des Prüfobjektes 7 die erste THz-Strahlung 3 gestreut und nachfolgend zu der zweiten THz-Sende- und Empfangseinrichtung 102 gestreut und dort detektiert wird, was zu einer Fehlmessung führen könnte.

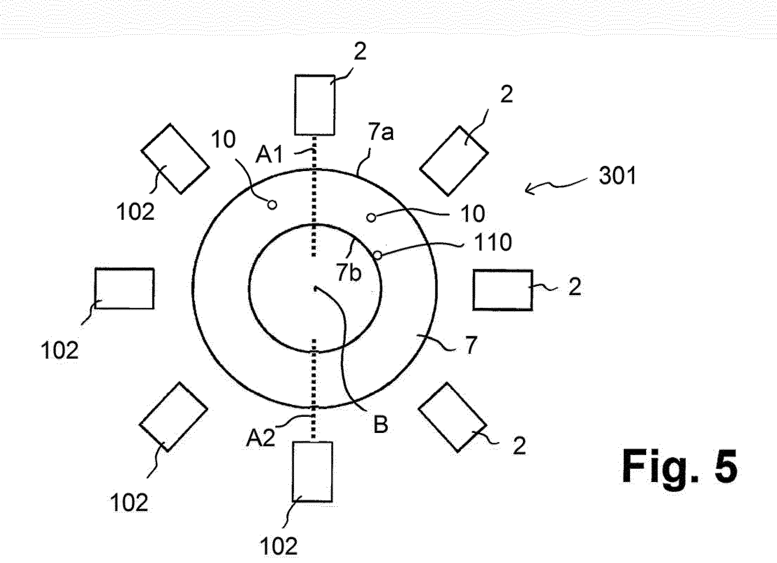

Fig. 5 zeigt eine Messvorrichtung 301, bei der mehrere THz-Sende- und Empfangseinrichtungen 2, 102 in Umfangsrichtung bzw. diametral gegenüber, insbesondere in einer zur Rohrachse B des Prüfobjektes bzw. zur Förderrichtung des Prüfobjektes senkrechten Ebene angeordnet sind. Gemäß der Messvorrichtung 301 der Fig. 5 können jeweils THz-Sende- und Empfangseinrichtungen 2 gemäß Fig. 1, 2 zur Messung von Fehlstellen 10, 110 und Standard-THz-Sende- und Empfangseinrichtungen 102 zur Vermessung der Wanddicken gegenüberliegend angeordnet sein, wobei dann z. B. jeweils ein Paar gegenüberliegender THz-Sende- und Empfangseinrichtungen 2, 102 misst, und die anderen beiden Paare ausgeschaltet sind, um gegenseitige Beeinflussungen zu vermeiden.

Weiterhin kann gemäß Fig. 5 auch durch z. B. gepulste Strahlung, d. h. zeitlich zueinander versetzten Pulsen, eine gegenseitige Beeinflussung der drei Paare aus gegenüberliegenden THz-Sende- und Empfangseinrichtungen 2, 102 vermieden werden.

Die Ausführungsformen der Fig. 4 und 5 ermöglichen somit eine gleichzeitige Vermessung sowohl ordnungsgemäßer Schichtdicken d1, d2, d3,. Da gemäß z. B. Fig. 5 Fehlstellen 10, 110 aus drei unterschiedlichen Einfallswinkeln ermittelt werden können, ist auch sichergestellt, dass jede Fehlstelle 10, 110 jeweils zumindest eine Stelle bzw. reflektierende Fläche aufweist, die zu einem entsprechenden Empfangssignal bei zumindest einer der drei THz-Sende- und Empfangseinrichtungen 2 führt.

Die besondere Ausbildung der Standard-THz-Sende- und Empfangseinrichtung 102 nach Fig. 4 und 5 ermöglicht insbesondere auch eine Schichtdickenvermessung durch eine Umkehrabtastung, mit folgendem Messprinzip:

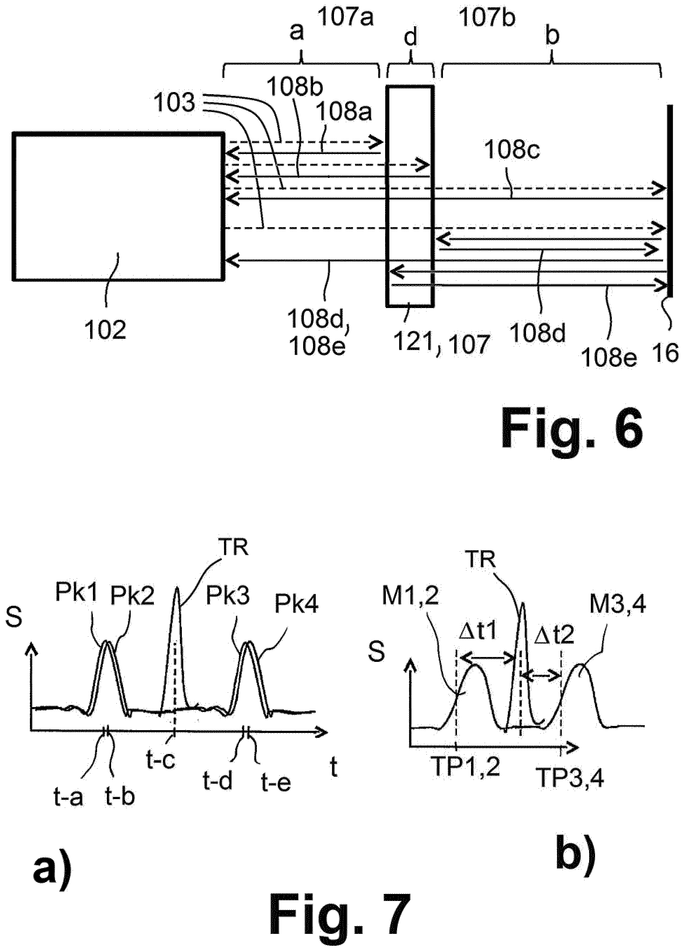

Die besondere Ausbildung der Standard-THz-Sende- und Empfangseinrichtung 102 ermöglicht insbesondere auch eine Schichtdickenvermessung durch eine Umkehrabtastung, mit einem Messprinzip der Figur 6, 7, das hier an der Folie 107 gezeigt ist und entsprechend für z. B. die Wandbereiche 120, 121 gilt.

Wie aus Figur 6 ersichtlich ist, fällt der THz-Sendestrahl 103 nach dem Vorlauf a auf die Vorderseite 107a des Prüfobjektes 107, wobei die Vorderseite 107a eine Grenzfläche von der Umgebung, das heißt dem Medium Luft mit einem Brechungsindex n0=1 zu dem Prüfobjekt 107 mit einem optisch dichteren Medium, bei Kunststoff zum Beispiel n7=1,5 darstellt. Beim Übergang bzw. beim Eintritt in die Vorderseite 107a wird ein erster Reflexionsstrahl 108a zu der Standard-Terahertz-Sende- und Empfangseinheit 102 zurück reflektiert, der somit insgesamt von der Standard-Terahertz-Sende- und Empfangseinheit 102 und nach Reflektion an der Vorderseite 107a zurück eine Wegstrecke von 2·a zurück legt und in dem idealisierten Signaldiagramm a) der Fig. 7 bei t-a detektiert wird. Der Anteil der bei einem derartigen Grenzübergang reflektierten Strahlung liegt bei etwa 4% der Intensität oder der Signalamplitude, sodass ein Großteil der ausgesandten Strahlung 103 in das Prüfobjekt 107 tritt und nachfolgend an der Rückseite 107b des Prüfobjekt es107 wiederum teilweise reflektiert wird, sodass zum Zeitpunkt t-b ein zweiter Reflexionsstrahl 108b detektiert wird.

Der durch das Prüfobjekt 107 hindurch tretende Sendestrahl 103 wird nachfolgend an dem Spiegel 16 total reflektiert, was in dem Signaldiagramm der Figur 7a) zu einem sehr starken, hier schematisiert verkleinerten Totalreflektionspeak TR bei dem Zeitpunkt t-c führt.

Der zurück reflektierte Total-Reflexionsstrahl 108c fällt nach der Spiegelstrecke b auf die Rückseite 107b des Prüfobjektes 107, wobei auch bei diesem Grenzflächeneintritt ein Reflexionsstrahl 108b erzeugt wird. Nachfolgend wird von dem Total-Reflexionsstrahl 108c beim Durchtritt durch die Vorderseite 107a ein weiterer Reflexionsstrahl 108e erzeugt.

Die Reflexionsstrahlen 108d und 108e gelangen zum Spiegel 16, werden dann zurück reflektiert und fallen nach Durchtritt durch die Schicht 107 zu der Terahertz-Sende- und Empfangseinheit 102, wo sie zu den Zeitpunkten t-d und t-e detektiert werden.

Mehrfachreflexionen an den Grenzflächen 107a, 107b werden hierbei jeweils vernachlässigt, da sie zu sehr kleinen Intensitätsbeiträgen führen, die hier nicht berücksichtigt werden.

Somit ergibt sich grundsätzlich das idealisierte Messdiagramm der Fig. 7 a), bei dem bei den Zeitpunkten t-a und t-b die ersten beiden, direkt reflektierten Reflexionspeaks Pk1 und Pk2 der ausgesandten Sendestrahlung 103 auftreten, nachfolgend bei t-c der intensive Totalreflektionspeak TR und nachfolgend zu den Zeitpunkten t-d und t-e die zweimal am Spiegel 16 reflektierten Reflexionspeaks Pk3, Pk4, die beim rückseitigen Eintritt in die Schicht 107 sowie Austritt aus der Schicht 107 erzeugt werden. Der Laufzeitunterschied zwischen t-a und t-b, sowie auch zwischen t-d und t-e gibt die Schichtdicke d wieder, die unter Berücksichtigung der Lichtgeschwindigkeit c und des Brechungsindex n7 berechnet werden kann.

Aufgrund der kleinen Schichtdicke d und der geringen erreichbaren Genauigkeit, die z. B. von der Bandbreite und Messgenauigkeit abhängt, sind die überlagerten (ineinander übergehenden) Reflexionspeaks Pk1 und Pk2 zu den Zeitpunkten t-a und t-b sowie die Reflexionspeaks Pk3 und Pk4 zu den Zeitpunkten t-d und t-e zu breit und somit nicht trennbar; zu messen sind lediglich nach Fig. 7 b) ein vor dem Totalreflektionspeak TR auftretender erster Messpeak M1,2 des vorderseitigen Strahlungseinfalls und ein nach dem Totalreflektionspeak TR auftretender zweiter Messpeak M3,4 des rückseitigen Strahlungseinfalls. Der Totalreflexions-Peak Tr selbst ist aufgrund seiner hohen Intensität sehr genau zu messen, so dass auch sein mittlerer Zeitpunkt t-c sehr genau bestimmt werden kann.

Die Messpeaks M1,2 und M3,4 weisen unterschiedliche zeitliche Abstände Δt1, Δt2 zu dem Totalreflexions-Peak Tr auf, insbesondere bei einem Vergleich jeweils ihrer einfallenden Flanken oder jeweils ihrer ausfallenden Flanken zu dem zeitlichen Mittelwert t-c des Totalreflexions-Peaks Tr, wobei Δt1 > Δt2. Aus der Differenz Δt1 - Δt2 können somit Informationen über die Schichtdicke d, insbesondere auch die Schichtdicke d selbst bestimmt werden; unter Berücksichtigung des Brechungsindex n7 in der Schicht 107 und der Lichtgeschwindigkeit im Vakuum vc gilt:

$$d = (\, \Delta t1 - \Delta t2 \,) \ * \ 1/2 \ * \ vc \,/ \, n6$$

Somit wird erfindungsgemäß eine vollständige und sehr genaue Untersuchung sowohl auf Fehlstellen 10, 110 als auch der Schichtdicken d, d1, d2, d3 ermöglicht.

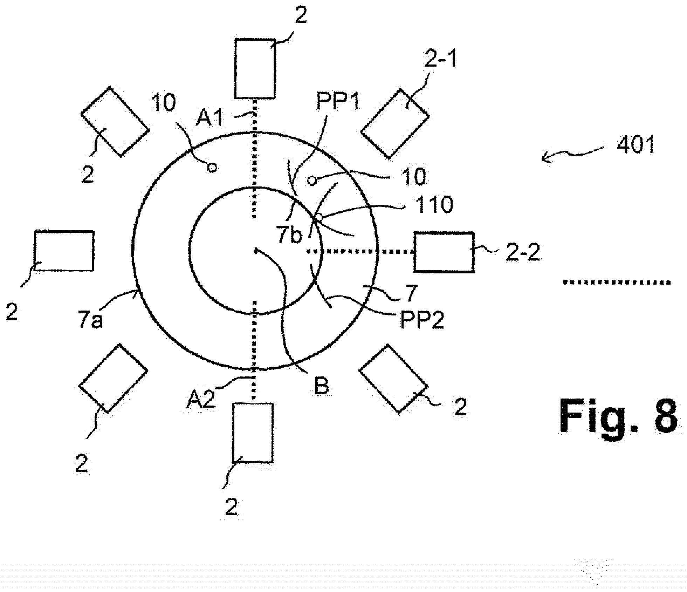

Bei sämtlichen Ausführungsformen ist weiterhin auch eine Bestimmung der Position, Größe und/oder Form der Fehlstellen 10, 110 durch Anordnung mehrerer THz-Sende- und Empfangseinheiten 2 um das Prüfobjekt 7, 107 herum möglich, wie es bei der THz-Messvorrichtung 401 nach Fig. 8 gezeigt ist; diese Bestimmung ist insbesondere auch in der Ausführungsform der Fig. 5 möglich.

Gemäß Fig. 8 ermittelt jede THz-Sende- und Empfangseinheit 2 zu einer Störstelle 10 oder 110 eine Positions- Punktemenge. Dies ist in Fig. 8 beispielhaft für eine erste THz-Sende- und Empfangseinheit 2- 1 gezeigt, die hier die erste Positions- Punktemenge PP1 ermittelt, die Punkte mit etwa gleicher Laufzeit umfasst. Diese liegen idealerweise auf einer Kugelschale um die erste THz-Sende- und Empfangseinheit 2- 1 herum, wobei die unterschiedlichen Laufwege in der Probe 7 und in der Luft im Allgemeinen zu einer etwas anderen Verteilung oder Formgebung der Positions- Punktemenge PP1 führen können. Da ein Kernbereich um die optische Achse herum ausgenommen ist, bildet die Positions-Punktemenge PP1 somit z. B. einen Ringbereich. Entsprechend ermittelt die zweite THz-Sende- und Empfangseinheit 2-2 eine zweite Positions- Punktemenge PP2 usw, woraufhin die Positions- Punktemenge PP1, PP2, PP3 nachfolgend geschnitten werden können, wodurch die Position genauer lokalisiert werden kann. Somit können auch Größe und/oder Formgebung der Störstellen 10 oder 110 ermittelt werden. Die zentrale Ermittlung kann in der Steuereinrichtung einer der THz-Sende- und Empfangseinheiten 2 erfolgen.

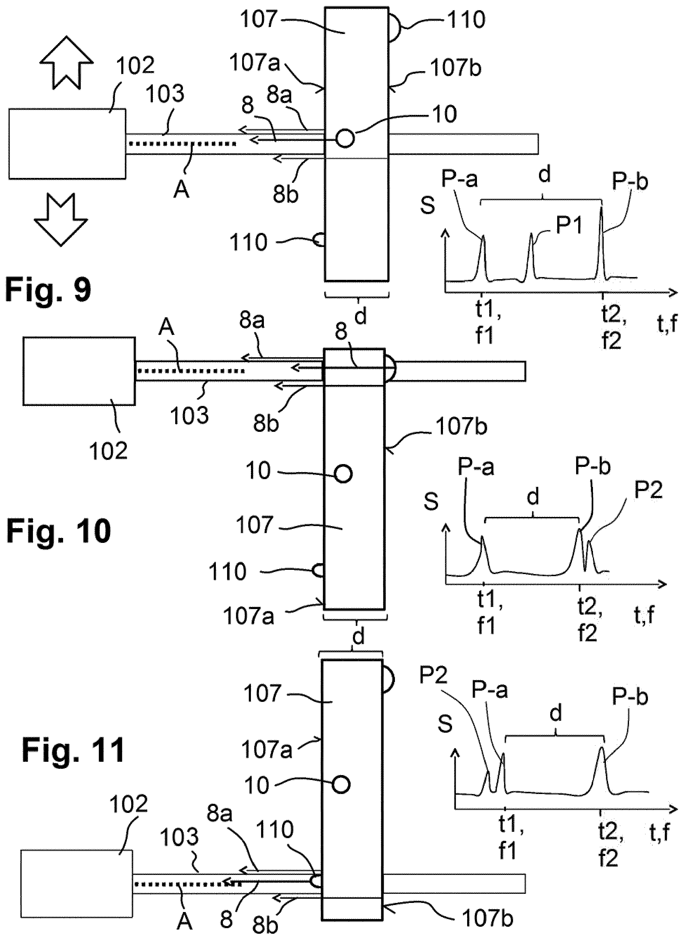

Gemäß der Ausführungsform der Figuren 9 bis 11 erfolgt eine Vermessung von Fehlstellen 10, 110 zusammen mit der Schichtdickenmessung. Hierzu sendet die THz-Sende- und Empfangseinheit 102 Terahertzstrahlung 103 entlang der optischen Achse A senkrecht auf die Grenzflächen, z. B. eine Vorderseite 107a und eine Rückseite 107b, einer Probe, hier z. B. einer Probe 107. Somit wird an der Vorderseite 107a eine erste Terahertzstrahlung 8a reflektiert, die von der THz-Sende- und Empfangseinheit 102 zum Zeitpunkt t1 als vorderer Messpeak P-a der Signalamplitude S(t) detektiert wird, und an der Rückseite 107b eine zweite Terahertzstrahlung 8b reflektiert, die von der THz-Sende- und Empfangseinheit 102 zum Zeitpunkt t2 als hinterer Messpeak P-b der Signalamplitude S(t) detektiert wird. Somit ist eine Laufzeitmessung zur Ermittlung der Schichtdicke d der Flachprobe 107 aus den Messwerten t2-t1 und Kenntnis des Brechungsindex n107 des Materials der Flachprobe 107 möglich.

Eine Vermessung der Probe 107 erfolgt durch relative Verstellung der THz-Sende- und Empfangseinheit 102 gegenüber der Probe 107, wie in Fig. 1 durch die Pfeile angedeutet ist, wodurch sich die Mess-Situationen der Figuren 9, 10, 11 ergeben. Somit erfolgen fortlaufend bzw. wiederholt Schichtdicken- Messungen durch Aussenden von Terahertzstrahlung 103 und Messung der Laufzeiten t1 und t2.

Fehlstellen 10, 110 führen in den Signaldiagrammen der Fig. 9, 10 und 11 zu Fehlstellen-Messpeaks P1, P2. Eine Erkennung der Fehlstellen-Messpeaks P1, P2 und Unterscheidung von den vorderen und hinteren Messpeaks P-a und P-b erfolgt vorzugsweise durch Vergleich aufeinanderfolgender Messungen, da zusätzlich zu den Messpeaks P-a und P-b ein oder mehrere weitere Messpeaks P1, P2 auftreten, oder es erfolgt bereits beim Erkennen von mehr als zwei Messpeaks eine Fehlermeldung.

Die Messung und Ermittlung von Fehlstellen nach Fig. 9 bis 11 kann mit der weiteren Ausführungsform gekoppelt werden; so kann z. B. eine Blende 6 bei der Ausführungsform der Fig. 1, 2 abwechselnd geöffnet und geschlossen werden. Hierzu kann die Blende z. B. rotieren, insbesondere um eine Blendenachse rotieren, so dass sie während einer kontinuierlichen Drehbewegung abwechselnd geöffnet und geschlossen ist.

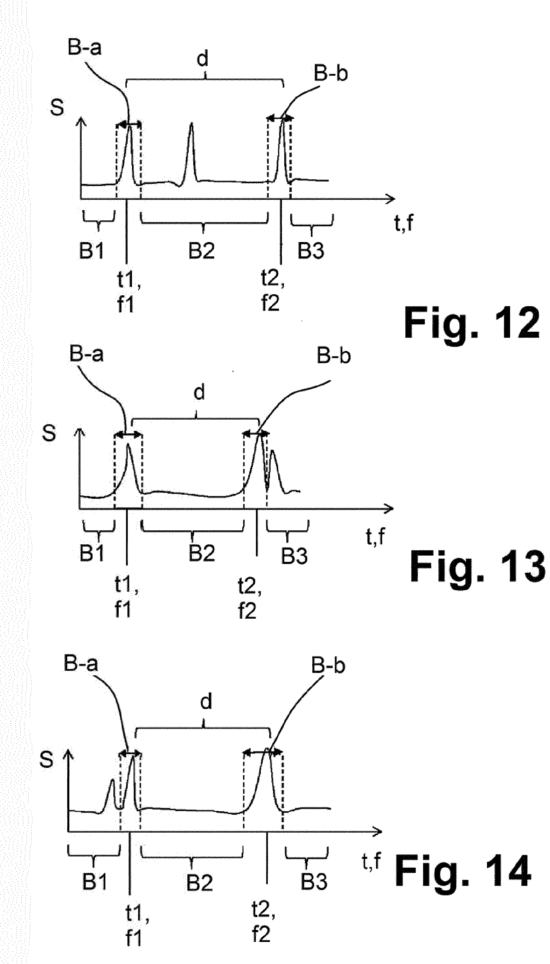

Die Figuren 12, 13, 14 zeigen vorteilhafte messtechnische Auswertungen der Signalamplituden S der Figuren 9, 10, 11, wobei eine messtechnische Ausblendung bzw. "elektronische Ausblendung" erfolgt: es werden jeweils in der Signalamplitude S um die ordnungsgemäßen vorderen und hinteren Messpeaks P-a und P-b herum , d.h. um deren Zeitwert t1, t2 oder Frequenzwert f1, f2 herum Ausblendbereiche B-a, B-b, d.h. Frequenzbereiche oder Laufzeitbereiche, festgelegt, in denen keine Auswertung auf Fehlstellen erfolgt. Somit verbleiben in der Signalamplitude S die Auswertebereiche B1, B2, B3 außerhalb der Ausblendbereiche B-a, B-b, in denen Messpeaks P1, P2, P3 der Fehlstellen ermittelt werden.

Insbesondere Kombinationen der verschiedenen Ausführungsformen ermöglichen somit eine genaue Vermessung, wobei durch Vermessung von verschiedenen Winkeln aus die Position genau ermittelt werden kann.

**Patentansprüche**

1. Terahertz-Messvorrichtung (1, 101, 201, 301, 401) zum Vermessen eines Prüfobjektes (7, 107), wobei die Terahertz-Messvorrichtung (1, 101, 201, 301, 401) aufweist:

   eine THz-Sende- und Empfangseinheit (2) zum Aussenden von Terahertz-Strahlung (3) in einem Abstrahl-Raumwinkel (4) entlang einer optischen Achse (A), Empfangen reflektierter Terahertz-Strahlung (8) und Erzeugen einer Signalamplitude (S) als Funktion der Zeit oder Frequenz (t, f), und
   eine Steuer- und Auswerteeinrichtung (12) zur Aufnahme und Auswertung der Signalamplitude (S),
   wobei die Steuer- und Auswerteeinrichtung (12) aus der Signalamplitude (S) Fehlstellen (10, 110) des Prüfobjektes (7, 107) ermittelt,
   **dadurch gekennzeichnet, dass**
   die Terahertz-Messvorrichtung (1, 101, 201, 301, 401) eine in der optischen Achse (A) positionierte oder positionierbare Blende (6) aufweist zum Ausblenden eines Kern-Bereichs (4a) des Abstrahl-Raumwinkels (4) um die optische Achse (A) herum.

2. Terahertz-Messvorrichtung (1, 101, 201, 301, 401) nach Anspruch 1, **dadurch gekennzeichnet, dass** die THz-Sende- und Empfangseinheit (2) ausgelegt oder eingerichtet ist, reflektierte Terahertz-Strahlung (8) aufzunehmen, die nicht an ordnungsgemäßen Grenzflächen (7a, 7b, 107a, 107b) des Prüfobjektes (7, 107) senkrecht reflektiert ist.

3. Terahertz-Messvorrichtung (1, 201, 301, 401) nach Anspruch 1 oder 2, **dadurch gekennzeichnet, dass** die Blende (6) zwischen einer aktiven Position zur Abschirmung des Kernbereichs (4a) und einer passiven Stellung zum Durchlassen des Kernbereichs (4a) verstellbar ist, z. B. durch Rotieren um eine Blenden-Achse.

4. Terahertz-Messvorrichtung (1, 101, 201, 301, 401) nach einem der vorherigen Ansprüche, **dadurch gekennzeichnet, dass** die Steuer- und Auswerteeinrichtung (12) Messpeaks (P1, P2, P3) in der empfangenen, reflektierten Terahertz-Strahlung (8) als Reflexionen an Fehlstellen (10, 110) des Prüfobjektes (7, 107) bewertet und bei Erkennen eines hinreichend hohen Messpeaks ein Fehlersignal ausgibt.

5. Terahertz-Messvorrichtung (201, 301) nach Anspruch 4, **dadurch gekennzeichnet, dass** die Steuer- und Auswerteeinrichtung (12) in einer aufgenommenen Signalamplitude (S) Ausblendbereiche (B-a, B-b) von Messpeaks (P-a, P-b) von Reflexionen (P-a, P-b) an ordnungsgemäßen Grenzflächen (7a, 7b, 107a, 107b) festlegt, und
   diese Ausblendbereiche (B-a, B-b) für die Ermittlung der Messpeaks (P1, P2, P3) der Reflexionen an den Fehlstellen (10, 110) des Prüfobjektes (7, 107) ausblendet oder nicht heranzieht.

6. Terahertz-Messvorrichtung (201, 301) nach einem der vorherigen Ansprüche, **dadurch gekennzeichnet, dass** eine Standard-Terahertz-Sende- und Empfangseinheit (102) zum Aussenden von Terahertz-Strahlung (103) innerhalb eines zweiten Kernbereichs (104) um ihre zweite optische Achse (A, A2) und zur Ermittlung einer Schichtdicke (d) des Prüfobjektes (7, 107) durch eine Laufzeitmessung unter Ermittlung von Reflexionen (P-a, P-b) an ordnungsgemäßen Grenzflächen (7a, 7b, 107a, 107b) als Messpeaks (P-a, P-b) einer aufgenommenen Signalamplitude (S) vorgesehen ist,
   wobei eine Fehlstelle (10, 110) als mindestens ein zusätzlicher Messpeak (P1, P2) detektiert wird.

7. Terahertz-Messvorrichtung (201, 301) nach Anspruch 6, **dadurch gekennzeichnet, dass** die Terahertz-Sende- und Empfangseinheit (2) und die Standard-Terahertz-Sende- und Empfangseinheit (102) gegenüberliegend zu dem Prüfobjekt (7) oder einer Prüfobjekt-Position (1007) vorgesehen sind, und der zweite Kernbereich (104) in dem durch die Blende (6) der Terahertz-Sende- und Empfangseinheit (2) abgeschatteten ersten Kernbereich (4a) der Terahertz-Sende- und Empfangseinheit (2) liegt.

8. Terahertz-Messvorrichtung (201, 301) nach Anspruch 7, **dadurch gekennzeichnet, dass** die erste optische Achse (A1) der Terahertz-Sende- und Empfangseinheit (2) und die zweite optische Achse (A2) der Standard-Terahertz-Sende- und Empfangseinheit (102) ganz oder im Wesentlichen zusammenfallen.

9. Terahertz-Messvorrichtung (201, 301) nach Anspruch 7 oder 8, **dadurch gekennzeichnet, dass** im Kernschatten der Blende (6), z. B. an der Rückseite der Blende (6), ein Spiegel (16) in der zweiten optischen Achse (A2) der Standard-Terahertz-Sende- und Empfangseinheit (102) vorgesehen ist, wobei die Standard-Terahertz-Sende- und Empfangseinheit (102) Terahertz-Strahlung (104)

- direkt an einer Grenzfläche (7d, 7c, 7b, 7a) reflektierte Terahertz-Strahlung (8), und
- nach Totalreflexion an dem Spiegel (16), nachfolgender Reflexion an einer Grenzfläche (7a, 7b, 7c, 7d) und erneuter Totalreflexion an dem Spiegel (16) reflektierte Terahertz-Strahlung detektiert.

10. Terahertz-Messvorrichtung (301) nach einem der Ansprüche 7 bis 9, **dadurch gekennzeichnet, dass** mehrere, z. B. drei, Paare von Terahertz-Sende- und Empfangseinheiten (2) und Standard-Terahertz-Sende- und Empfangseinheiten (102) in Umfangsrichtung verteilt um das Prüfobjekt (107) oder eine Prüfobjekt-Position (1007) angeordnet sind.

11. Terahertz-Messvorrichtung (101) nach einem der Ansprüche 1 bis 4, **dadurch gekennzeichnet, dass** die Sende- und Empfangseinheit (2) mit ihrer optischen Achse (A) nicht-senkrecht zu den Grenzflächen (107a, 107b) des Prüfungsobjektes (107) ausgerichtet ist.

12. Terahertz-Messvorrichtung (1, 101, 201, 301, 401) nach einem der vorherigen Ansprüche, **dadurch gekennzeichnet, dass** mehrere Terahertz-Sende- und Empfangseinheiten (2) um das Prüfobjekt (107) oder eine Prüfobjekt-Position (1007) herum verteilt angeordnet sind und jeweils eine Positions- Punktemenge (PP1, PP2, PP3) einer oder mehrerer Fehlstellen (10, 110) ermitteln, und eine zentrale Steuer- und Auswerteeinrichtung vorgesehen ist, die aus den mehreren Positions- Punktemengen (PP1, PP2, PP3) eine Position und/oder Größe und/oder Form der einzelnen Fehlstellen (10, 110) ermittelt.

13. Terahertz-Messvorrichtung (1, 101, 201, 301, 401) nach einem der vorherigen Ansprüche, **dadurch gekennzeichnet, dass** die THz-Sende- und Empfangseinheit (2) Terahertz-Strahlung (3) im Frequenzbereich von 10 GHz bis 10 THz, insbesondere 100 GHz bis 3 THz, ausstrahlt und detektiert, insbesondere voll-elektronisch mit Sende-Dipol und Empfangs-Dipol.

14. Terahertz-Messverfahren zum Vermessen eines Prüfobjektes (7, 107), mit mindestens folgenden Schritten:

Aussenden von Terahertz-Strahlung (3) auf ein Prüfobjekt (7, 107), Aufnehmen reflektierter Terahertz-Strahlung (8) und Erzeugen einer Signalamplitude (S(t, f)) als Funktion der Zeit (t) oder der Frequenz (f), Auswertung der Signalamplitude (S(t, f)), wobei Reflexions-Peaks (P1, P2, P3) in der Signalamplitude (S(t, f)) als Reflexionen an Fehlstellen (10, 110) des Prüfobjektes (7, 107) gewertet werden und in Abhängigkeit der Auswertung ein Signal, z. B. Fehlersignal und/oder Positionssignal, ausgegeben wird, wobei die Terahertz-Strahlung (3) in einem Abstrahl-Raumwinkel (4) entlang einer optischen Achse (A) ausgegeben wird **dadurch gekennzeichnet, dass** die Terahertz-Strahlung (3) in einem Kern-Bereich (4a) um die optische Achse (A) herum durch eine Blende (6) ausgeblendet wird.

15. Terahertz- Messverfahren nach Anspruch 14, **dadurch gekennzeichnet, dass** in einer aufgenommenen Signalamplitude (S) Ausblendbereiche (B-a, B-b), z. B. Frequenzbereiche oder Laufzeitbereiche, von Messpeaks (P-a, P-b) von Reflexionen (P-a, P-b) an ordnungsgemäßen Grenzflächen (7a, 7b, 107a, 107b) festgelegt werden, und diese Ausblendbereiche (B-a, B-b) für die Ermittlung der Reflexions-Peaks (P1, P2, P3) der Reflexionen an den Fehlstellen (10, 110) des Prüfobjektes (7, 107) ausgeblendet oder nicht herangezogen werden, so dass die Reflexions-Peaks (P1, P2, P3) außerhalb der Ausblendbereiche (B-a, B-b) ermittelt werden.

16. Terahertz- Messverfahren nach Anspruch 14 oder 15, **dadurch gekennzeichnet, dass** Terahertz-Strahlung (3) unter unterschiedlichen Winkeln auf das Prüfobjekt (7, 107) gesendet und detektiert wird.

17. Terahertz- Messverfahren nach einem der Ansprüche 14 bis 16, **dadurch gekennzeichnet, dass** die Blende (6) zur Messung der Fehlstellen (10, 110) des Prüfobjektes (7, 107) in die aktive Position zur Abschirmung des Kernbereichs (4a) und für eine Standard-Messung von Schichtdicken des Prüfobjektes (7, 107) in eine passive Stellung zum Durchlassen des Kernbereichs (4a) verstellt wird.

18. Terahertz-Messverfahren nach einem der Ansprüche 14 bis 17, **dadurch gekennzeichnet, dass** das Prüfobjekt (7, 107) von einer ersten Seite auf Fehlstellen (7,107) untersucht wird unter Ausblendung des ersten Kern-Bereichs (4a) und von der gegenüber liegenden zweiten Seite Schichtdicken (d1, d2) des Prüfobjektes (7, 107) in einem zweiten Kernbereich (104a) vermessen werden, der in dem ersten Kernbereich (4a) liegt, insbesondere mit einer Spiegelung an einem Spiegel (16) hinter dem Prüfobjekt für eine Umkehrabtastung.

19. Terahertz-Messverfahren nach einem der Ansprüche 14 bis 18, **dadurch gekennzeichnet, dass** die Grenzflächen (7a, 7b, 107a, 107b) des Prüfobjektes (7, 107) unter einem nicht-senkrechten Einfallswinkel mit der Terahertz-Strahlung (3) bestrahlt werden und an den Grenzflächen (7a, 7b; 107a, 107b) des Prüfobjektes (7, 107) reflektierte Hauptreflexions-Strahlen (8a, 8b) nicht zur Terahertz-Sende- und Empfangseinheit (2) reflektiert und dort detektiert werden.

20. Terahertz-Messverfahren nach einem der Ansprüche 14 bis 19, **dadurch gekennzeichnet, dass** zur Ermittlung einer Schichtdicke (d) des Prüfobjektes (7, 107) durch eine Laufzeitmessung Terahertz-Strahlung (103) senkrecht auf ordnungsgemäße Grenzflächen (7a, 7b, 107a, 107b) des Prüfobjektes (7, 107) eingestrahlt wird unter Detektion der Messpeaks der Grenzflächen, und
eine Fehlstelle (10, 110) als mindestens ein zusätzlicher Messpeak (P1, P2) detektiert wird.

21. Terahertz-Messverfahren nach einem der Ansprüche 14 bis 20, **dadurch gekennzeichnet, dass** Terahertz-Strahlung (3) von mehreren um das Prüfobjekt (107) herum angeordneten Terahertz-Sende- und Empfangseinheiten (2) aus gesendet und empfangen wird, wobei von jeder Terahertz-Sende- und Empfangseinheit (2) eine Positions-Punktemenge (PP1, PP2, PP3) einer oder mehrerer Fehlstellen (10, 110) ermittelt wird, und
aus den mehreren Positions- Punktemengen (PP1, PP2, PP3) eine Position und/oder Größe und/oder Form der einzelnen Fehlstellen (10, 110) ermittelt wird, z. B. als Schnittmenge der mehreren Positions-Punktemengen (PP1, PP2, PP3).

22. Terahertz-Messverfahren nach einem der Ansprüche 14 bis 21, **dadurch gekennzeichnet, dass** Prüfobjekte (7, 107) aus einem oder mehreren der folgenden Materialien vermessen werden:
Kunststoff, faserverstärkter Kunststoff, Steingut wie z. B. Keramik, Papier, Glas, Gummi.

23. Terahertz-Messverfahren nach Anspruch 22, **dadurch gekennzeichnet, dass** es direkt nach oder während der Herstellung des Prüfobjektes (7, 107), z. B. nach einer Extrusion, durchgeführt wird.

**Claims**

1. Terahertz measuring apparatus (1, 101, 201, 301, 401) for measuring a test object (7, 107), wherein the terahertz measuring apparatus (1, 101, 201, 301, 401) comprises:

   a THz transmission and reception unit (2) for emitting terahertz radiation (3) in an emission solid angle (4) along an optical axis (A), receiving reflected terahertz radiation (8) and producing a signal amplitude (S) as a function of time or frequency (t, f), and
   a control and evaluation device (12) for receiving and evaluating the signal amplitude (S), wherein the control and evaluation device (12) ascertains defects (10, 110) of the test object (7, 107) from the signal amplitude (S), **characterised in that**
   the terahertz measuring apparatus (1, 101, 201, 301, 401) comprises a mask (6) positioned or positionable in the optical axis (A) for masking a core region (4a) of the emission solid angle (4) about the optical axis (A).

2. Terahertz measuring apparatus (1, 101, 201, 301, 401) according to claim 1, **characterised in that** the THz transmission and reception unit (2) is designed or configured to receive reflected terahertz radiation (8) which is not reflected vertically from appropriate boundary surfaces (7a, 7b, 107a, 107b) of the test object (7, 107).

3. Terahertz measuring apparatus (1, 101, 201, 301, 401) according to claim 1 or claim 2, **characterised in that** the mask (6) is movable between an active position for screening the core region (4a) and a passive position for passing through the core region (4a), e.g. by rotating about a mask axis.

4. Terahertz measuring apparatus (1, 101, 201, 301, 401) according to any one of the preceding claims, **characterised in that** the control and evaluation device (12) evaluates measurement peaks (P1, P2, P3) in the received, reflected terahertz radiation (8) as reflections from the defects (10, 110) of the test object (7, 107) and upon detecting a sufficiently high measurement peak emits an error signal.

5. Terahertz measuring apparatus (201, 301) according to claim 4, **characterised in that** the control and evaluation device (12) within a received signal amplitude (S) determines masking regions (B-a, B-b) of measurement peaks (P-a, P-b) of reflections (P-a, P-b) from appropriate boundary surfaces of (7a, 7b, 107a, 107b), and masks or does not take into consideration these masking regions (B-a, B-b) for determining the measurement peaks (P1, P2, P3) of the reflections from the defects (10, 110) of the test object (7, 107).

6. Terahertz measuring apparatus (201, 301) according to any one of the preceding claims, **characterised in that** a standard terahertz transmission and reception unit (102) is provided for emitting terahertz radiation (103) within a second core region (104) about its second optical axis (A, A2) and for determining a layer thickness (d) of the test object (7, 107) by means of a run time measurement by determining reflections (P-a, P-b) from appropriate boundary surfaces (7a, 7b, 107a, 107b) as measurement peaks (P-a, P-b) of a received signal amplitude (S), wherein a defect (10, 110) is detected as at least one additional measurement peak (P1, P2).

7. Terahertz measuring apparatus (201, 301) according to claim 6, **characterised in that** the terahertz transmission and reception unit (2) and the standard terahertz transmission and reception unit (102) are provided opposite the test object (7) or a test object position (1007), and the second core region (104) lies in the first core region (4a) of the terahertz transmission and reception unit (2) shaded by the mask (6) of the terahertz transmission and reception unit (2).

8. Terahertz measuring apparatus (201, 301) according to claim 7, **characterised in that** the first optical axis (A1) of the terahertz transmission and reception unit (2) and the second optical axis (A2) of the standard terahertz transmission and reception unit (102) fully or substantially coincide.

9. Terahertz measuring apparatus (201, 301) according to claim 7 or claim 8, **characterised in that** in the deepest shadow of the mask (6), e.g. on the rear of the mask (6) a mirror (16) is provided in the second optical axis (A2) of the standard terahertz transmission and reception unit (102), wherein the standard terahertz transmission and reception unit (102) detects terahertz radiation (104)

- terahertz radiation (8) reflected directly from a boundary surface (7d, 7c, 7b, 7a), and
- following total reflection from the mirror (16), subsequent reflection from a boundary surface (7a, 7b, 7c, 7d) and renewed total reflection of terahertz radiation reflected from the mirror (16).

10. Terahertz measuring apparatus (301) according to any one of claims 7 to 9, **characterised in that** a plurality of, e.g. three, pairs of terahertz transmission and reception units (2) and standard terahertz transmission and reception units (102) are arranged distributed in the circumferential direction about the test object (107) or a test object position (1007).

11. Terahertz measuring apparatus (101) according to any one of claims 1 to 4, **characterised in that** the transmission and reception unit (2) is aligned with its optical axis (A) non-perpendicular to the boundary surfaces (107a, 107b) of the test object (107).

12. Terahertz measuring apparatus (1, 101, 201, 301, 401) according to any one of the preceding claims, **characterised in that** a plurality of terahertz transmission and reception units (2) are arranged distributed about the test object (107) or a test object position (1007) and in each case determine a position point set (PP1, PP2, PP3) of one or more defects (10, 110), and a central control and evaluation device is provided, which from the plurality of position point sets (PP1, PP2, PP3) determines a position and/or a magnitude and/or form of individual defects (10, 110).

13. Terahertz measuring apparatus (1, 101, 201, 301, 401) according to any one of the preceding claims, **characterised in that** the THz transmission and reception unit (2) emits and detects terahertz radiation (3) in the frequency range of 10 GHz to 10 THz, in particular 100 GHz to 3 THz, in particular fully electronically with transmission dipole and reception dipole.

14. Terahertz measurement method for measuring a test object (7, 107), having the following steps:

transmitting terahertz radiation (3) to a test object (7, 107), receiving reflected terahertz radiation (8) and producing a signal pulse (S(t, f)) as a function of the time (t) or the frequency (f), evaluation of the signal amplitude (S(t,f)), wherein reflection peaks (P1, P2, P3) in the signal amplitude (S(t,f) are assessed as reflections from defects (10, 110) of the test object (7, 107) and as a function of the evaluation a signal, e. g. an error signal and/or position signal, is emitted wherein the terahertz radiation (3) is emitted in an emission solid angle (4) along an optical axis (A)
**characterised in that**
the terahertz radiation (3) is masked out by a mask (6) in a core region (4a) about the optical axis (A).

15. Terahertz measurement method according to claim 14, **characterised in that** in a received signal amplitude (S) masking regions (B-a, B-b), e.g. frequency ranges or run time ranges, of measurement peaks (P-a, P-b) of reflections (P-a, P-b) are determined on appropriate boundary surfaces (7a, 7b, 107a, 107b), and these masking regions (B-a, B-b) are masked out or not taken into consideration for the determination of the reflection peaks (P1, P2, P3) of the reflections from the defects (10, 110) of the test object (7, 107), so that the reflection peaks (P1, P2, P3) are determined outside the masking regions (B-a, B-b).

16. Terahertz measurement method according to claim 14 or claim 15, **characterised in that** terahertz radiation (3) is transmitted and detected at various angles to the test object (7, 107).

17. Terahertz measurement method according to any one of claims 14 to 16, **characterised in that** the mask (6) for measuring the defects (10, 110) of the test object (7, 107) is moved to the active position for screening the core region (4a) and for a standard measurement of layer thicknesses of the test object (7, 107) to a passive position to allow passage through the core region (4a).

18. Terahertz measurement method according to any one of claims 14 to 17, **characterised in that** the test object (7, 107) is investigated for defects (7, 107) from a first side with the masking of the first core region (4a) and from the opposing second side layer thicknesses (d1, d2) of the test object (7, 107) are measured in a second core region (104a), which lies in the first core region (4a), in particular with a mirroring from a mirror (16) behind the test object for a reverse scanning.

19. Terahertz measurement method according to any one of claims 14 to 18, **characterised in that** the boundary surfaces (7a, 7b, 107a, 107b) of the test object (7, 107) are irradiated at a non-perpendicular angle of incidence with the terahertz radiation (3) and main reflection beams (8a, 8b) reflected from the boundary surfaces (7a, 7b; 107a, 107b) of the test object (7, 107) are not reflected to the terahertz transmission and reception unit (8) and detected there.

20. Terahertz measurement method according to any one of claims 14 to 19, **characterised in that** to determine a layer thickness (d) of the test object (7, 107) by a run time measurement terahertz radiation (103) is irradiated perpendicularly on appropriate boundary surfaces (7a, 7b, 107a, 107b) of the test object (7, 107) with detection of the measurement peaks of the boundary surfaces and a defect (10, 110) is detected as at least one additional measurement peak (P1, P2).

21. Terahertz measurement method according to any one of claims 14 to 20, **characterised in that** terahertz radiation (3) is transmitted from and received by a plurality of terahertz transmission and reception unit (2) arranged about the test object (107), wherein by each terahertz transmission and reception unit (2) a position point set (PP1, PP2, PP3) of one or more defects (10, 110) is determined and from the plurality of position point sets (PP1, PP2, PP3) a position and/or magnitude and/or form of the individual defects (10, 110) is determined, e.g. as an intersection of the plurality of position point sets (PP1, PP2, PP3).

22. Terahertz measurement method according to any one of claims 14 to 21, **characterised in that** test objects (7, 107) made of one or more of the following materials are measured: plastic, fibre-reinforced plastic, earthenware such as for example ceramic, paper, glass, rubber.

23. Terahertz measurement method according to claim 22, **characterised in that** it is performed immediately after or during the manufacture of the test object (7, 107), e.g. following extrusion.

**Revendications**

1. Dispositif de mesure térahertz (1, 101, 201, 301, 401) pour mesurer un objet à contrôler (7, 107), le dispositif de mesure térahertz (1, 101, 201, 301, 401) comprenant :

une unité d'émission et de réception térahertz (2) permettant d'émettre un rayonnement térahertz (3) selon un angle solide de rayonnement (4) le long d'un axe optique (A), de recevoir le rayonnement térahertz réfléchi (8) et de générer une amplitude de signal (S) en tant que fonction du temps ou de la fréquence (t, f), et un dispositif de commande et d'évaluation (12) pour recevoir et évaluer l'amplitude de signal (S), le dispositif de commande et d'évaluation (12) déterminant des défauts (10, 110) de l'objet à contrôler (7, 107) à partir de l'amplitude de signal (S), **caractérisé en ce que** le dispositif de mesure térahertz (1, 101, 201, 301, 401) comprend un cache (6) positionné ou positionnable dans l'axe optique (A) pour cacher une région centrale (4a) de l'angle solide de rayonnement (4) autour de l'axe optique (A).

2. Dispositif de mesure térahertz (1, 101, 201, 301, 401) suivant la revendication 1, **caractérisé en ce que** l'unité d'émission et de réception térahertz (2) est conçue pour ou adaptée à recevoir le rayonnement térahertz réfléchi (8) qui n'est pas réfléchi perpendiculairement sur des surfaces limitrophes convenables (7a, 7b, 107a, 107b) de l'objet à contrôler (7, 107).

**3.** Dispositif de mesure térahertz (1, 101, 201, 301, 401) suivant la revendication 1 ou 2, **caractérisé en ce que** le cache (6) peut être réglé entre une position active pour cacher la région centrale (4a) et une position passive pour laisser passer la région centrale (4a), par exemple par rotation autour d'un axe de cache.

**4.** Dispositif de mesure térahertz (1, 101, 201, 301, 401) suivant une des revendications précédentes, **caractérisé en ce que** le dispositif de commande et d'évaluation (12) évalue des pics de mesure (P1, P2, P3) dans le rayonnement térahertz réfléchi (8) reçu, en tant que réflexions sur des défauts (10, 110) de l'objet à contrôler (7, 107) et émet un signal de défaut en cas de reconnaissance d'un pic de mesure suffisamment élevé.

**5.** Dispositif de mesure térahertz (1, 101, 201, 301, 401) suivant la revendication 4, **caractérisé en ce que** le dispositif de commande et d'évaluation (12) fixe dans une amplitude de signal (S) reçue des parties à cacher (B-a, B-b) de pics de mesure (P-a, P-b) de réflexions (P-a, P-b) sur des surfaces limitrophes convenables (7a, 7b, 107a, 107b) et cache ou n'utilise pas ces parties à cacher (Ba, Bb) pour la détermination des pics de mesure (P1, P2, P3) de réflexions sur les défauts (10, 110) de l'objet à contrôler (7, 107).

**6.** Dispositif de mesure térahertz (1, 201, 301) suivant une des revendications précédentes, **caractérisé en ce qu'**est prévue une unité d'émission et de réception térahertz standard (102) pour émettre un rayonnement térahertz (103) à l'intérieur d'une seconde région centrale (104), autour de son second axe optique (A, A2) et pour évaluer une épaisseur de couche (d) de l'objet à contrôler (7, 107) à l'aide d'une mesure du temps de propagation en détectant des réflexions (P-a, P-b) sur des surfaces limitrophes convenables (7a, 7b, 107a, 107b) en tant que pics de mesure (P-a, P-b) d'une amplitude de signal (S) reçue, un défaut (10, 110) étant détecté en tant qu'au moins un pic de mesure (P1, P2) supplémentaire.

**7.** Dispositif de mesure térahertz (201, 301) suivant la revendication 6, **caractérisé en ce que** l'unité d'émission et de réception térahertz (2) et l'unité d'émission et de réception térahertz standard (102) sont prévues à l'opposé de l'objet à contrôler ou d'une position d'objet à contrôler (1007), et **en ce que** la seconde région centrale (104) se situe dans la première région centrale (4a) cachée par le cache (6) de l'unité d'émission et de réception térahertz (2).

**8.** Dispositif de mesure térahertz (201, 301) suivant la revendication 7, **caractérisé en ce que** le premier axe optique (A1) de l'unité d'émission et de réception térahertz (2) et le second axe optique (A2) de l'unité d'émission et de réception térahertz standard (102) coïncident intégralement ou essentiellement.

**9.** Dispositif de mesure térahertz (201, 301) suivant la revendication 7 ou 8, **caractérisé en ce qu'**un miroir (16) est prévu dans l'ombre absolue du cache (6), par exemple sur la face arrière du cache (6), dans le second axe optique (A2) de l'unité d'émission et de réception standard (102), l'unité d'émission et de réception standard (102) détectant :

    - un rayonnement térahertz (104),
    - un rayonnement térahertz (8) réfléchi directement sur une surface limitrophe (7d, 7c, 7b, 7a), et
    - un rayonnement térahertz réfléchi après réflexion totale sur le miroir (16), suivie d'une réflexion sur une surface limitrophe (7a, 7b, 7c, 7d) et, une nouvelle réflexion totale sur le miroir (16).

**10.** Dispositif de mesure térahertz (301) suivant l'une des revendications 7 à 9, **caractérisé en ce que** plusieurs, par exemple trois paires d'unités d'émission et de réception térahertz (2) et d'unités d'émission et de réception térahertz standard (102) sont réparties circonférentiellement autour de l'objet à contrôler (107) ou d'une position d'objet à contrôler (1007).

**11.** Dispositif de mesure térahertz (101) suivant une des revendications 1 à 4, **caractérisé en ce que** l'unité d'émission et de réception (2) n'est pas, avec son axe optique (A), orientée perpendiculairement par rapport aux surfaces limitrophes (107a, 107b) de l'objet à contrôler (107).

**12.** Dispositif de mesure térahertz (1, 101, 201, 301, 401) suivant l'une des revendications précédentes, **caractérisé en ce que** plusieurs unités d'émission et de réception térahertz (2) sont réparties autour de l'objet à contrôler (107) ou d'une position de l'objet à contrôler (1007) et déterminent respectivement une quantité de points de position (PP1, PP2, PP3) d'un ou de plusieurs défauts (10, 110) et **en ce qu'**un dispositif de commande et d'évaluation central est prévu, qui détermine à partir de la pluralité de quantités de points de position (PP1, PP2, PP3) une position et/ou une grandeur et/ou une forme des différents défauts (10, 110).

**13.** Dispositif de mesure térahertz (1, 101, 201, 301, 401) suivant l'une des revendications précédentes, **caractérisé en ce que** l'unité d'émission et de réception (2) émet et détecte un rayonnement térahertz (3) dans la gamme des fréquences de 10 GHz à 10 THz, en particulier de 100 GHz à 3 THz, notamment de manière entièrement électronique avec dipôle d'émission et dipôle de réception.

**14.** Procédé de mesure térahertz destiné à mesurer un objet à contrôler (7, 107), le procédé comportant au moins les étapes suivantes :

  - émission d'un rayonnement térahertz (3) vers un objet à contrôler (7/107),
  - réception d'un rayonnement térahertz réfléchi (8) et génération d'une amplitude de signal (S(t, f) en tant que fonction du temps (t) ou de la fréquence (f),
  - évaluation de l'amplitude de signal (S(t, f), des pics de réflexion (P1, P2, P3) dans l'amplitude signal (S(t, f) étant interprétés en tant que réflexions sur des défauts (10, 110) de l'objet à contrôler (7, 107) et, en fonction de l'évaluation, émission d'un signal, par exemple un signal de défaut et/ou un signal de position,

  le rayonnement térahertz (3) étant émis selon un angle solide de rayonnement (4) le long d'un axe optique (A)
  **caractérisé en ce que**
  le rayonnement térahertz (3) est caché par un cache (6) dans une région centrale (4a) autour de l'axe optique (A).

**15.** Procédé de mesure térahertz suivant la revendication 14, **caractérisé en ce que,** dans une amplitude de signal (S) reçue, des parties à cacher (B-a, B-b), par exemple des gammes de fréquence ou des plages de propagation, sont fixées par des pics de mesure (P-a, P-b) de réflexions (P-a, P-b) sur des surfaces limitrophes convenables (7a, 7b, 107a, 107b) et **en ce que** ces parties à cacher (B-a, B-b) sont cachées ou ne sont pas utilisées pour la détermination des pics de réflexion (P1, P, P3), de manière que ceux-ci soient déterminés à l'extérieur des parties à cacher (B-a, B-b).

**16.** Procédé de mesure térahertz suivant la revendication 14 ou 15, **caractérisé en ce que** le rayonnement térahertz (3) est émis et détecté selon différents angles vers l'objet à contrôler.

**17.** Procédé de mesure térahertz suivant la revendication 14 à 16, **caractérisé en ce que** pour la mesure des défauts (10, 110) de l'objet à contrôler (7, 107), le cache (6) est réglé en position active pour cacher la région centrale (4a) et pour une mesure standard d'épaisseurs de couche de l'objet à contrôler (7, 107), en position passive laissant passer la région centrale (4a).

**18.** Procédé de mesure térahertz suivant les revendications 14 à 17, **caractérisé en ce que** l'objet à contrôler (7, 107) est examiné depuis un premier côté pour détecter des défauts (7, 107) en cachant la première région centrale (4a) et, depuis un second côté opposé, des épaisseurs de couche (d1, d2) de l'objet à contrôler (7, 107) sont mesurées dans une seconde région centrale (104a), qui se situe dans la première région centrale (4a), en particulier avec une réflexion sur un miroir (16) derrière l'objet à contrôler pour un balayage inversé.

**19.** Procédé de mesure térahertz suivant les revendications 14 à 18, **caractérisé en ce que** les surfaces limitrophes (7a, 7b, 107a, 107b) de l'objet à contrôler (7, 107) sont irradiées par le rayonnement térahertz selon un angle d'incidence non perpendiculaire et **en ce que** des rayons de réflexion principale (8a, 8b) réfléchis sur les surfaces limitrophes (7a, 7b, 107a, 107b) de l'objet à contrôler (7, 107) ne sont pas réfléchis vers ni détectés par l'unité d'émission et de réception térahertz (2).

**20.** Procédé de mesure térahertz suivant l'une des revendications 14 à 19, **caractérisé en ce que** pour la détermination d'une épaisseur de couche (d) de l'objet à contrôler (7, 107) à l'aide d'une mesure du temps de propagation, un rayonnement térahertz (103) est projeté perpendiculairement sur des surfaces limitrophes convenables (7a, 7b, 107a, 107b) en détectant des pics de mesure des surfaces limitrophes et un défaut (10, 110) est détecté en tant qu'au moins un pic de mesure supplémentaire (P1, P2).

**21.** Procédé de mesure térahertz suivant l'une des revendications 14 à 20, **caractérisé en ce qu'**un rayonnement térahertz (3) est émis et reçu par plusieurs unités d'émission et de réception térahertz (2) disposées autour de l'objet à contrôler (107), chaque unité d'émission et de réception térahertz déterminant une quantité de points de position (PP1, PP2, PP3) d'un ou de plusieurs défauts (10, 110), et **en ce qu'**une position et/ou grandeur et/ou forme des différents défauts (10, 110) sont déterminées à partir de la pluralité de quantités de points de position (PP1, PP2, PP3), par exemple en tant que quantité moyenne de la pluralité de quantités de points de position (PP1, PP2, PP3).

**22.** Procédé de mesure térahertz suivant l'une des revendications 14 à 21, **caractérisé en ce que** sont mesurés des objets à contrôler (7, 107) dans un ou plusieurs des matériaux suivants : matière plastique, matière plastique renforcée de fibres, faïence, telle que par exemple la céramique, papier, verre, caoutchouc.

**23.** Procédé de mesure térahertz suivant la revendication 22, **caractérisé en ce qu'**il est exécuté directement après ou pendant la fabrication de l'objet à contrôler (7, 107), par exemple après une extrusion.

Fig. 1

Fig. 2

EP 3 443 297 B1

Fig. 3

EP 3 443 297 B1

Fig. 4

EP 3 443 297 B1

**Fig. 5**

**Fig. 6**

a)

b)

**Fig. 7**

Fig. 8

Fig. 9

Fig. 10

Fig. 11

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010010285 A1
- US 2005098728 A1
- US 2015211934 A1